# EUROPÄISCHE PATENTSCHRIFT

(11) **EP 0 380 445 B1**
(45) Veröffentlichungstag und Bekanntmachung des Hinweises auf die Patenterteilung: **04.05.1994**
(21) Anmeldenummer: 90810039.9
(22) Anmeldetag: 17.01.1990
(51) Int. Cl.: B60M 1/30, E01B 5/08

(54) **Verbundstromschiene aus Aluminium und Stahl, insbesondere Hochleistungs-Bahnstromschiene**
Composite current rail of aluminium and steel, especially for a high-power railway current rail
Rail d'alimentation composite en aluminium et acier en particulier voie d'alimentation ferroviaire à haute charge

(30) Priorität: 23.01.1989 CH 186/89
(43) Veröffentlichungstag der Anmeldung: 01.08.1990
(73) Patentinhaber: ALUSUISSE-LONZA SERVICES AG, 8034 Zürich (CH)
(72) Erfinder: Mier, Gerhard, D-7700 Singen (DE)

(56) Entgegenhaltungen:
- DE-A- 3 543 831
- FR-A- 2 176 200
- US-A- 3 356 276
- US-A- 4 014 417
- PATENT ABSTRACTS OF JAPAN vol. 8, no. 148 (M-308)(1585) 11 Juli 1984, & JP-A-59 45227 (FURUKA DENKI KOGYO K.K.) 14 März 1984,

## Beschreibung

Die Erfindung bezieht sich auf eine Verbundstromschiene, insbesondere eine Hochleistungs-Bahnstromschiene, mit einem mechanisch stabilen und elektrisch gut leitenden Aluminium-Trägerprofil und mit wenigstens einem kleinen Verbundprofil aus einem elektrisch hochleitfähigen, duktilen Aluminium-Halteprofil und wenigstens einem Stahlband als Lauffläche für Stromschleifschuhe.

Es ist bekannt, für den Antrieb elektrischer Bahnen, Kabinentaxis, Laufkrane und dgl. Stromschienen zu verwenden, wenn Freileitungen ausser Betracht fallen. Das hohe Gewicht einer reinen Stahlstromschiene kann durch eine leitwertgleiche, kombinierte Aluminium-Stahl-Stromschiene auf etwa 1/7 vermindert werden.

Folgende Herstellungsverfahren wurden bisher in industriellem Massstab angewendet:
- Verbundstrangpressen eines Aluminiumprofils mit einem Stahlband
- Zusammenschrauben eines Stahlprofils mit seitlichen Aluminium-platten
- Aufklemmen eines U-förmigen Stahlblechs auf ein Aluminiumprofil
- Eingiessen von Aluminium in die Seiten eines Doppel-T-Stahl-profils.

Von den erwähnten Verfahren ist das vom Verbundstrangpressen besonders vorteilhaft, weil eine metallische Bindung zwischen Stahl und Aluminium entsteht. Diese Verbindung gewährleistet nicht nur einen optimalen Stromübergang, sondern verhindert auch eine Spaltkorrosion im-Uebergangsbereich der beiden Metalle.

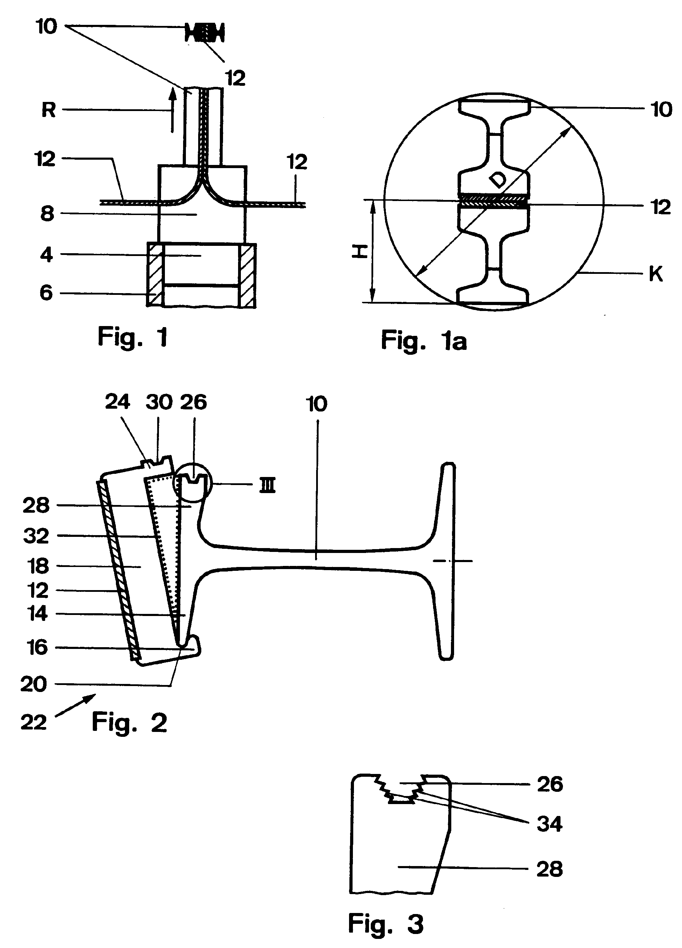

Das Prinzip des bekannten Verbundstrangpressens eines Aluminium-Profils mit einem Stahlband ist in Fig. 1 dargestellt. Aus presstechnischen Gründen werden gleichzeitig zwei Verbundstromschienen mit je einem Aluminium-Trägerprofil 10 und einem Stahlband 12 hergestellt. Die beiden aufeinanderliegenden Stahlbänder 12 werden von beiden Seiten in das Strangpresswerkzeug 8 eingeführt und im Innern um 90° in die Strangpressrichtung R umgelenkt. In der Schweisskammer des Strangpresswerkzeugs 8 verbindet sich das aus dem Container 6 mit dem Pressbarren 4 eingespeiste Aluminium mit dem Stahlband 12 durch Diffusionsvorgänge, wodurch eine metallische Bindung entsteht.

Wegen der Umlenkung um 90° können nur flache Stahlbänder 12 verwendet werden, steife Stahlprofile wären unbrauchbar.

Die aus dem Strangpresswerkzeug 8 austretenden, Kopf an Kopf gepressten Verbundprofile aus einem Stahlband 12 und einem vollen Aluminium-Trägerprofil 10 sind im obersten Bereich angedeutet.

Wie in Fig. 1a gezeigt, können die Kopf an Kopf gepressten Verbundprofile auch ein hohles Aluminium-Trägerprofil 10 haben.

Die Pressgeschwindigkeit für die Kopf an Kopf gepressten Verbundprofile ist wesentlich kleiner als bei normalen Aluminium-Strangpressprofilen.

Aus fertigungstechnischen Gründen ist der von der Leistungsfähigkeit der Presse abhängige Durchmesser D des Umschlingungskreises K (Fig. 1a) der Verbundprofile beschränkt. Bei einem maximalen Durchmesser D von 280 mm beispielsweise resultiert eine maximale Höhe H einer Verbundstromschiene von etwa 130 mm.

Obwohl verbundstranggepresste Stromschienen gegenüber anderen Ausführungsformen wesentliche Vorteile aufweisen wird ihre uneingeschränkte, wirtschaftliche Verwendung, insbesondere als Hochleistungs-Bahnstromschiene, durch mehrere Parameter, wie z.B. die maximal möglichen äusseren Abmessungen, die Strangpressgeschwindigkeit und bei Hohlprofilen die Wandstärken, eingeengt. Verbundstranggepresste Stahl-Aluminium-Stromschienen können nach dem derzeit bekannten Stand der Technik nur bis zu einem Metergewicht von maximal etwa 18 kg und einer Profilhöhe von maximal etwa 130 mm produziert werden.

Insbesondere Bahnbetriebe benötigen jedoch heute teilweise grösser dimensionierte Stromschienen, die sich mit den heutigen Mitteln nicht oder nicht wirtschaftlich im an sich vorteilhaften Verbundstrangpressverfahren herstellen lassen.

In der FR-A-2 176 200 wird eine Stromverbundschiene beschrieben aus einem Leichtmetallkern und darauf angebracht ein dünnes Laminat aus einem Leichtmetall und rostfreiem Stahl als Gleitfläche. Der Kern und die Laminatschichten werden durch Elektronenstrahlschweissung miteinander verbunden.

Der Erfinder hat sich deshalb die Aufgabe gestellt, eine Verbundstromschiene der eingangs genannten Art zu schaffen, welche in bezug auf die Profilhöhe und das Profilgewicht nicht durch presstechnische Parameter beschränkt ist und daher jede erforderliche Stromtragfähigkeit zulässt, insbesondere auch oberhalb 4700 A. Diese Stromschiene soll eine mechanische Festigkeit aufweisen, welche den Rüttelbeanspruchungen und Temperaturwechseln eines rauhen Bahnbetriebes sowohl im Tunnel aus auch im Freien über einen Zeitraum von 30 - 50 Jahren widerstehen. Weiter soll die Stromschiene insgesamt einen guten Stromübergang gewährleisten, universell einsetzbar sein und wirtschaftlich herstellbar sein.

Die Aufgabe wird erfindungsgemäss dadurch gelöst, dass das Verbundprofil ein stranggepresstes Verbundprofil ist.

Im Gegensatz zu einer üblichen verbundstranggepressten Stromschiene besteht die metallische Bindung Stahl-Aluminium nicht mehr in einer direkten Verbindung zwischen dem Stahlband und dem Aluminium-Trägerprofil, sondern in einer Verbindung des Stahlbands mit einem klein dimensionierten, bevorzugt geometrisch einfachen Halteprofil, welches immer aus hochleitendem, duktilem Aluminium bzw. einer Aluminiumlegierung mit entsprechenden Eigenschaften besteht. Erst dieses Verbundprofil ist seinerseits über das duktile Aluminium-Halteprofil mit dem Aluminium-Trägerprofil verbunden.

Das aus dem duktilen Aluminium-Halteprofil und dem Stahlband bestehende Verbundprofil hat vorzugsweise einen Querschnitt, der im wesentlichen in Form eines langgestreckten Rechtecks ausgebildet ist. Analog zu konventionellen Lösungen ist das Stahlband teilweise in eine längslaufende Aussparung des Halteprofils eingebettet.

Es hat sich als zweckmässig erwiesen, das Halteprofil 2 - 10 mal, insbesondere 3 - 5 mal so dick wie das Stahlband auszubilden.

Die mechanisch stabile und elektrisch gut leitende Verbindung des Verbundprofils mit dem Trägerprofil erfolgt vorzugsweise unter Ausbildung einer metallischen Bindung. Diese hat gegenüber einer im Prinzip auch anwendbaren Schraub- oder Klemmverbindung die bekannten Vorteile.

Nach einer ersten Variante weist das duktile Aluminium-Halteprofil auf wenigstens einer Längsseite einen Flansch auf, der durch plastische Verformung in einer entsprechend ausgesparten, längslaufenden Nut des Trägerprofils verankert ist. Der Anpressdruck und die Verformung sind so gross, dass eine metallische Bindung entsteht.

Die Intensität der Verbindung zwischen dem Halteprofil und dem Trägerprofil kann noch erhöht werden, indem wenigstens das Trägerprofil im Bereich der plastischen Verformung eingepresste Zähne aufweist.

Nach einer zweiten Variante ist das duktile Aluminium-Halteprofil entlang wenigstens einer Längsseite mit dem Trägerprofil verschweisst, vorzugsweise mittels einer Schweissnaht.

Sowohl nach der ersten als auch nach der zweiten Variante können das duktile Halteprofil und das Trägerprofil entlang der nicht plastisch verformten oder verschweissten Längsseite so ineinandergesteckt sein, dass auch auf dieser Seite eine mechanisch stabile und elektrisch gut leitende Verbindung entsteht. Nach einer solchen Lösung entsteht jedoch, im Gegensatz zu einer beidseitigen plastischen Verformung oder Verschweissung, nur auf einer Längsseite eine metallische Bindung.

Auf den nicht plastisch verformten oder verschweissten Verbindungsbereich des duktilen Halteprofils mit dem Trägerprofil kann ein an sich bekanntes Kontaktfett aufgetragen sein.

Neben dem Halteprofil kann auch das Trägerprofil aus immer duktile Eigenschaften aufweisendem Reinaluminium oder einer duktilen Aluminiumlegierung bestehen, wenn die mechanische Festigkeit des Trägerprofils gegenüber der elektrischen Leitfähigkeit eine untergeordnete Rolle spielt. Im Normalfall besteht das Trägerprofil jedoch aus einer hochfesten Aluminiumlegierung.

Das duktile Halteprofil und ein allenfalls duktiles Trägerprofil bestehen vorzugsweise aus Reinaluminium, beispielsweise Al99,5, E-Al (99,5) oder Al99,8, oder aus einer Aluminium-Magnesium-Silizium-Legierung, beispielsweise AlMgSiO,5, E-AlMgSiO,5 oder Al99,75MgSi.

Falls das Trägerprofil aus einer hochfesten Aluminiumlegierung besteht, härtet diese vorzugsweise nach dem Verbinden des Trägerprofils mit dem Verbundprofil aus. Als hochfeste Aluminiumlegierungen werden beispielsweise die dem Fachmann bekannten AlMgSi1, AlMgMn oder AlMgCuMn verwendet.

Die erwähnten duktilen Aluminiumlegierungen haben eine elektrische Leitfähigkeit der Grössenordnung 30 m/Ω.mm², Reinaluminium dagegen eine solche von wenigstens 35 m/Ω.mm². Die elektrische Leitfähigkeit der erwähnten hochfesten Aluminiumlegierungen für das Trägerprofil liegt bei etwa 18 - 26 m/Ω.mm².

Die mit den Halteprofilen die Verbundprofile bildenden Stahlbänder, welche die Lauffläche mit hoher Abriebfestigkeit und langer Lebensdauer bilden, bestehen aus einem Edelstahl, wie z.B. x5CrNi189 (DIN 17440) oder x6Cr18. Die elektrische Leitfähigkeit des Stahlbandes liegt wesentlich tiefer als diejenige des hochfesten Aluminium-Trägerprofils, nämlich bei etwa 1 - 2 m/Ω.mm².

Alle Legierungen werden in dem Fachmann bekannten Aushärtungsgraden eingesetzt.

Die erfindungsgemässe Verbundstromschiene kann in allen erforderlichen Querschnittsformen und -abmessungen hergestellt werden. Dabei kann ein aus einem Stahlband und einem Halteprofil bestehendes Verbundprofil in jeder Lage und in jedem Winkel auf das Trägerprofil aufgebracht werden, insbesondere parallel oder rechtwinklig zur Auflagefläche des Trägerprofils. Weiter kann mehr als ein Verbundprofil auf das Trägerprofil aufgebracht werden, insbesondere wenn diese für einen seitlich geführten Stromschleifschuh abgewinkelt sind.

Die erfindungsgemässe Verbundstromschiene ermöglicht insbesondere auch die Herstellung von Hochleistungs-Bahnstromschienen, die bisher wegen zu grossen Metergewichtes oder zu grosser Abmessungen im Verbundstrangpressverfahren nicht herstellbar waren.

Gleichzeitig können die Herstellungskosten gesenkt werden, weil nur ein relativ kleiner Aluminium-Querschnitt mit dem Stahlband verbundgepresst wird. Dieser Aluminium-Querschnitt wird nur so gross gewählt, wie für den Verbundpressvorgang technisch und wirtschaftlich erforderlich ist.

Es ist kostengünstiger, den wesentlich grösseren Trägerquerschnitt als normales Profil zu pressen und erst nachträglich mit dem Stahl-Aluminium-Verbundprofil zu verbinden. Normale Profile können mit wesentlich grösserer Pressgeschwindigkeit hergestellt werden als Verbundprofile und haben demzufolge bedeutend niedrigere Herstellkosten pro kg.

Diese Kosteneinsparung überwiegt die Kosten für das Verbinden des Verbundprofils mit dem Trägerprofil bei weitem, insbesondere bei grösseren Querschnitten.

Die erfindungsgemässe Verbundstromschiene hat weiterhin den Vorteil, dass für das Verbundprofil ein hochleitfähiges, duktiles Aluminium-Halteprofil eingesetzt werden kann, ohne dass die mechanische Robustheit der ganzen Stromschiene nennenswert beeinträchtigt wird. Die nötige Robustheit der Stromschiene, welche insbesondere für den Bahnbetrieb erforderlich ist, wird durch das Stahlband einerseits und das Trägerprofil andererseits festgelegt, welches letztere bei erforderlicher mechanischer Robustheit stets aus einer hochfesten Aluminiumlegierung besteht. Eine hochfeste Aluminiumlegierung widersteht, im Gegensatz zu einer duktilen, auch einer hohen Flächenpressung bei einer Schliessringbolzen-Verbindung im Stossbereich der Stromschienen.

Ausser der hohen Leitfähigkeit hat ein duktiles Aluminium-Halteprofil noch einen zweiten Vorteil für das gesamte Verbundprofil. Die unterschiedliche Wärmedehnung von Stahl und Aluminium führt bei Temperaturschwankungen zu Scherbeanspruchungen in der Grenzfläche zwischen den beiden Metallen. Durch die niedrige Streckgrenze des Reinaluminium bzw. der duktilen Aluminiumlegierung werden diese Scherbeanspruchungen vermindert.

Mit einer erfindungsgemässen Hochleistungs-Stromschiene ist auch die Normung der Verbundprofile wesentlich erleichtert. Die unterschiedlichen Anforderungen der Bahnbetriebe an die Höhe und Befestigungsmasse der Stromschiene können durch Anpassung des Trägerprofils erfüllt werden, während für das Verbundprofil in der Regel die gleichen Abmessungen eingesetzt werden können. Das hat insbesondere auch wirtschaftliche Vorteile, weil die Werkzeugkosten für ein normales Trägerprofil nur einen Bruchteil der Werkzeugkosten für ein Verbundprofil betragen.

Die Erfindung wird anhand der in der Zeichnung dargestellten Ausführungsbeispiele näher erläutert. Es zeigen schematisch:
- Fig. 2 das Einlegen des Trägerprofils in das Verbundprofil zur plastischen Verformung,
- Fig. 3 ein Detail im Bereich III von Fig. 2,
- Fig. 4 das Prinzip der einseitigen plastischen Verformung mit einer Andrückrolle,
- Fig. 5 den Bereich V in Fig. 4, nach dem Andrücken, leicht vergrössert,
- Fig. 6 einen Axialschnitt durch eine gezahnte Andrückrolle,
- Fig. 7 eine Ansicht einer gezahnten Andückrolle,
- Fig. 8 einen Schnitt durch eine einseitig geschweisste Verbundstromschiene,
- Fig. 9 einen Schnitt durch eine einseitig geschweisste Verbundstromschiene, mit etwa vertikaler Lauffläche,
- Fig. 10 einen Schnitt durch eine Verbundstromschiene mit zwei Verbundprofilen, und
- Fig. 11 einen Schnitt durch eine beidseitig geschweisste Verbundstromschiene, im Verbindungsbereich mit einer andern Verbundstromschiene.

Das im Querschnitt doppel-T-förmige Trägerprofil 10 aus einer hochfesten Aluminiumlegierung ist mit einem gestreckten Profillappen 14 in eine durch einen Wulst 16 des duktilen Aluminium-Halteprofils 18 gebildete Nut 20 gesteckt und noch leicht abgewinkelt. Das Halteprofil 18, welches mit dem Stahlband 12 das stranggepresste Verbundprofil 22 bildet, hat einen längslaufenden Flansch 24, welcher nach dem vollständigen Eindrehen des Trägerprofils 10 über dessen mit einer längslaufenden Nut 26 versehenen Profillappen 28 liegt.

Auch der Flansch 24 des Halteprofils 18 weist eine längslaufende, aussenliegende Nut 30 auf, welche über der Nut 26 liegt.

Die in der Endlage des Trägerprofils 10 aufeinanderliegenden Flächen des Halteprofils 18 und des Trägerprofils 10 sind mit hochreiner Vaseline, einem Kontaktfett 32, beschichtet. Wahlweise kann dieses Kontaktfett 32 auch nur auf eine der aneinanderliegenden Flächen aufgebracht sein.

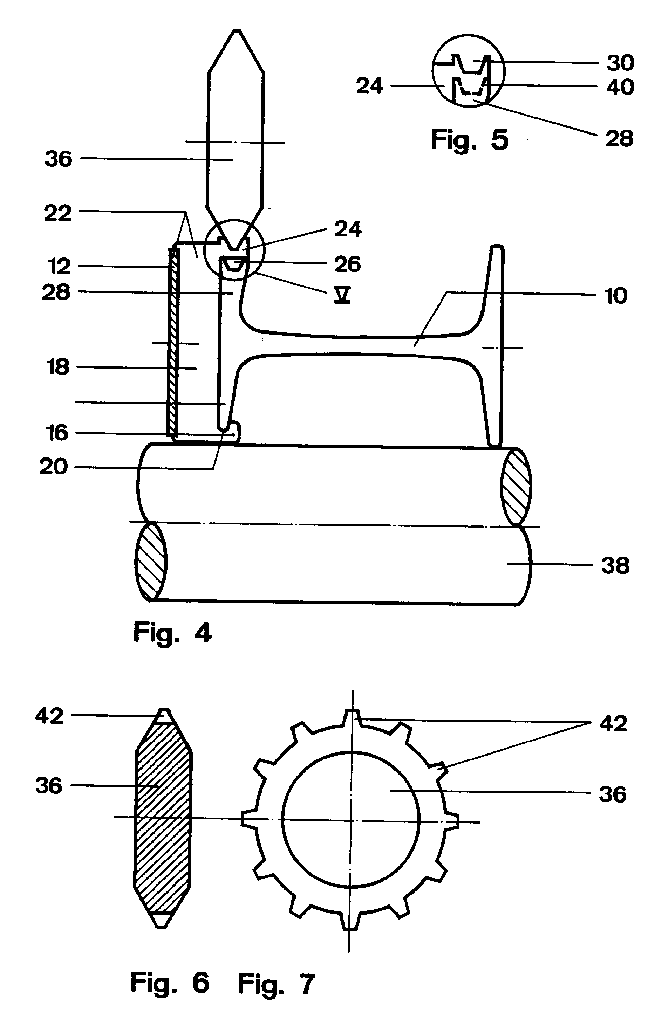

Fig. 3 zeigt in vergrösserter Darstellung das stirnseitige Ende des Profillappens 28 des Trägerprofils 10 mit der längslaufenden Nut 26. An beiden Seitenwänden der Nut 26 sind stranggepresste Zähne 34 sichtbar. Diese dienen der verbesserten elektrischen Verbindung beim Eindrücken des Flanschs 24 des Halteprofils 18 in die Nut 26 des Trägerprofils 10, beispielsweise mittels einer in der Nut 30 (Fig. 2) laufenden Andrückrolle (Fig. 4, 6, 7).

Fig. 4 zeigt das Verbundprofil 22 mit vollständig eingedrehtem Trägerprofil 10. Der gestreckte Profillappen 14 ist in die vom Wulst 16 gebildete Nut 20 eingesteckt, der Flansch 24 liegt über dem Profillappen 18. In die längslaufende Nut 30 (Fig. 2) des Flansches 24 ist eine stationäre, in der Höhe verstellbare Andrückrolle 36, welche sich in Richtung ihres äusseren Umfangs trapezförmig verengt, eingeführt. Die zu verbindenden Trägerprofil 10 und Verbundprofil 22 gleiten über einen Rollgang 38 bekannter Bauart.

Zur Herstellung der plastischen Verformung wird das duktile Material des Flansches 24 mit der Andrückrolle 36 in die Nut 26 welche gezahnt sein kann (Fig. 3), gedrückt. Dabei entsteht eine metallische Bindung zwischen Verbund- 22 und Trägerprofil 10.

Fig. 5 zeigt das Verbundprofil nach dem Andrücken. Der Bereich der metallischen Bindung zwischen dem Flansch 24 des Halteprofils 18 und dem Profillappen 28 des Trägers 10 ist mit einer punktierten Linie 40 angedeutet. Damit ist das stranggepresste Stahl-Aluminium-Verbundprofil 22 mechanische fest und elektrisch gut leitend mit dem Trägerprofil 10 verbunden.

In der Zeichnung nicht dargestellt kann eine Rolle des Rollgangs 38 durch eine weitere Andrückrolle ersetzt sein, so dass beidseitig eine metallische Bindung durch plastische Verformung herstellbar ist.

In den Fig. 6, 7 ist eine Andrückrolle 36 mit Zähnen dargestellt, wodurch die plastische Verformung und damit metallische Bindung nicht kontinuierlich (Fig. 4) sondern punktweise erfolgt. Zweckmässig sind die Geometrie der Zahnanordnung und des Rollgangs 38 (Fig. 4) so aufeinander abgestimmt, dass der Eindruck eines Zahns 42 jeweils an der Stelle erfolgt, an welcher das Verbundprofil 22 auf einer Rolle aufliegt.

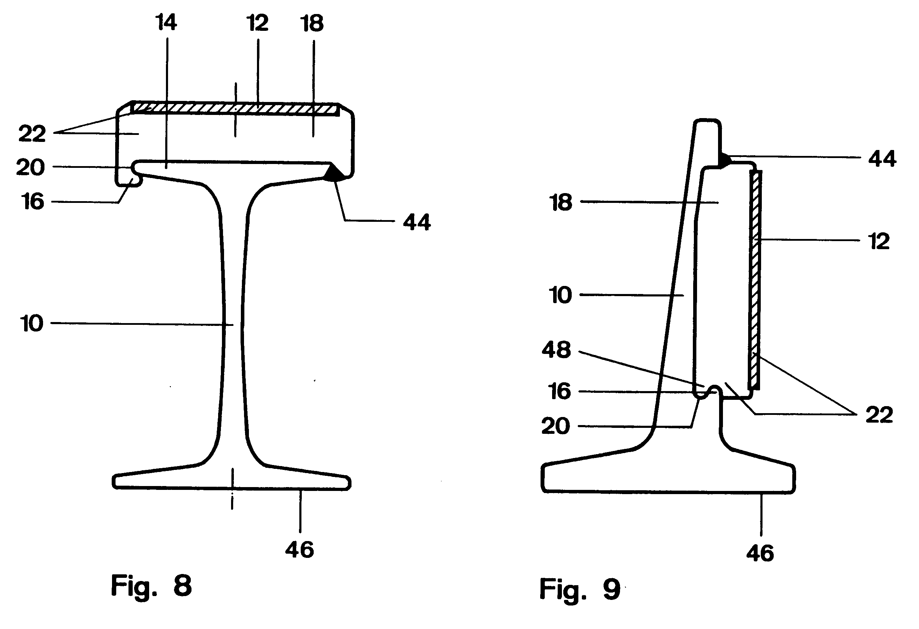

Die Verbundstromschiene gemäss Fig. 8 wird hergestellt, indem das Trägerprofil 10, in die Nut 20 gesteckt, in das Verbundprofil 22 eingedreht und mittels einer längslaufenden Schweissnaht 44 elektrisch gut leitend und mechanisch fest mit dem Halteprofil 18 verbunden wird. Das Stahlband 12, welches die Lauffläche für den Stromschleifschuh bildet, verläuft parallel zur Befestigungsfläche 46 des Trägerprofils 10.

In der Variante gemäss Fig. 9 verläuft die Lauffläche des Stahlbandes 12 etwa vertikal zur Befestigungsfläche 46 des Trägerprofils 10. Auf der untern Seite ist das Verbundprofil 22 durch eine Steckverbindung mit dem Trägerprofil 10 verbunden. Die Nut 20 wird hier von einem Wulst 16 des Trägerprofils 10 gebildet, in welche eine entsprechende Ausformung 48 des Halteprofils 18 gesteckt ist. Auf der oberen Seite sind das Halteprofil 18 und das Trägerprofil 10 mit einer Schweissnaht 44 oder mit Schweisspunkten verbunden.

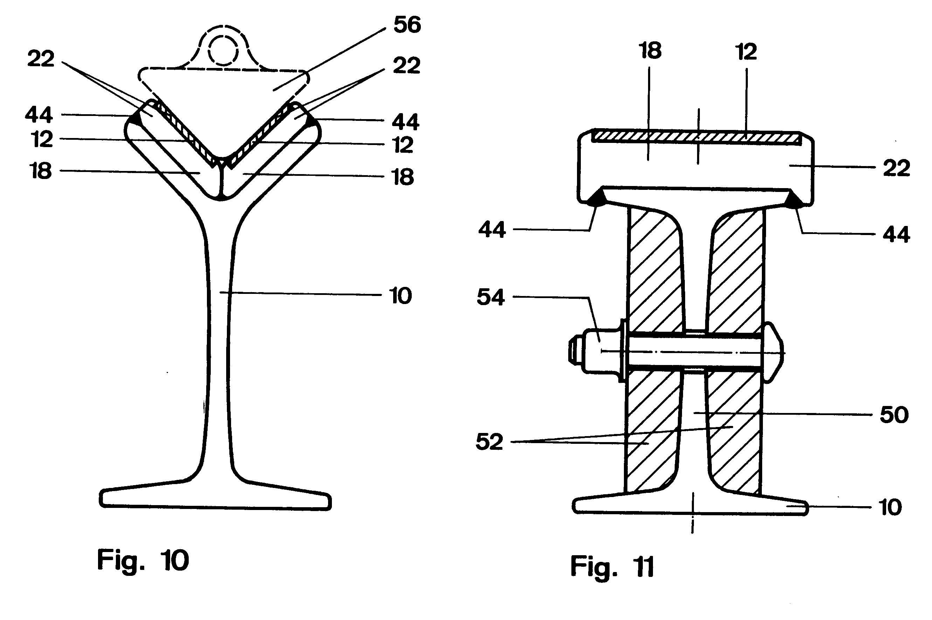

Der obere Teil des in Fig. 10 dargestellten Aluminium-Trägerprofils 10 ist im wesentlichen Y-förmig ausgebildet. In die gebildete Rinne sind zwei Verbundprofile 22 mit je einem Stahlband 12 und einem Halteprofil 18 eingelegt und mittels je einer Schweissnaht 44 mit dem Aluminium-Trägerprofil 10 mechanisch stabil und elektrisch gut leitend verbunden.

Ein gestrichelt angedeuteter Stromschleifschuh 56 gleitet gleichzeitig auf beiden im Winkel angeordneten Stahlbändern 12 und wird dadurch seitlich geführt.

Eine Verbundstromschiene nach Fig. 10 wäre schon allein wegen der winkligen Schleiffläche durch ein normales Verbundprofil nicht darstellbar. Denn die nach dem Stand der Technik bekannten Verbundstrangpressprofile können immer nur ein flaches Stahlband 12 als Verschleissauflage haben, weil dieses bei dem bekannten Verbundstrangprozess um 90° umgelenkt werden muss.

Im in Fig. 11 gezeigten Bereich einer Stossverbindung von zwei Verbundstromschienen sind am Mittelsteg 50 der Trägerschiene 10 zwei Seitenlaschen 52 aus einer hochfesten Aluminiumlegierung angepresst. Diese Flächenpressung erfolgt mittels mehrerer Schliessringbolzen 54, welche eine sogenannte Huckbolt-Verbindung bilden. Das Trägerprofil 10 besteht ebenfalls aus einer hochfesten Aluminiumlegierung, eine duktile Aluminiumlegierung könnte bei der hohen Flächenpressung zu fliessen beginnen.

Das Stahl-Aluminium-Verbundprofil 22 ist über zwei Schweissnähte mit dem Trägerprofil 10 verbunden.

Obwohl in den Ausführungsbeispielen nur als Vollprofile ausgebildete Trägerprofile 10 dargestellt sind, können diese selbstverständlich auch als Hohlprofile, wie z.B. in der den Stand der Technik darstellenden Fig. 1a gezeigt, ausgebildet sein.

Weiter sind nicht dargestellte, duktile Trägerprofile 10 wesentlich massiver, als in den Beispielen für die aus hochfestem Aluminium bestehenden Trägerprofile gezeigt, ausgebildet.

## Patentansprüche

1. Verbundstromschiene, insbesondere Hochleistungs-Bahnstromschiene, mit einem mechanisch stabilen und elektrisch gut leitenden Aluminium-Trägerprofil (10) und mit wenigstens einem kleinen Verbundprofil (22) aus einem elektrisch hochleitfähigen, duktilen Aluminium-Halteprofil (18) und wenigstens einem Stahlband (12) als Lauffläche für Stromschleifschuhe (56),
dadurch gekennzeichnet, dass
das Verbundprofil (22) ein stranggepresstes Verbundprofil (22) ist.

2. Stromschiene nach Anspruch 1, dadurch gekennzeichnet, dass der Querschnitt des Verbundprofils (22) im wesentlichen in Form eines langgestreckten Rechtecks ausgebildet, und das Stahlband (12) vorzugsweise teilweise in eine längslaufende Aussparung des Halteprofils (18) gebettet ist.

3. Stromschiene nach Ansprch 1 oder 2, dadurch gekennzeichnet, dass das Halteprofil (18) 2 - 10 mal, vorzugsweise 3 - 5 mal so dick wie das Stahlband (12) ist.

4. Stromschiene nach einem der Ansprüche 1 - 3, dadurch gekennzeichnet, dass entlang wenigstens einer Längsseite ein Flansch (24) des duktilen Halteprofils (18) plastisch verformt in einer längslaufenden Nut (26) des Trägerprofils (10) verankert ist, vorzugsweise unter Ausbildung einer metallischen Bindung.

5. Stromschiene nach Anspruch 4, dadurch gekennzeichnet, dass wenigstens das Trägerprofil (10) im Bereich der plastischen Verformung, vorzugsweise einer Nut (26), eingepresste Zähne (34) aufweist.

6. Stromschiene nach einem der Ansprüche 1 - 5, dadurch gekennzeichnet, dass das duktile Halteprofil (18) entlang wenigstens einer Längsseite mit dem Trägerprofil (10) verschweisst ist, vorzugsweise über eine Schweissnaht (44).

7. Stromschiene nach einem der Ansprüche 1 - 6, dadurch gekennzeichnet, dass das duktile Halteprofil (18) und das Trägerprofil (10) entlang der nicht plastisch verformten oder verschweissten Längsseite ineinandergesteckt sind, vorzugsweise durch Ausbildung einer von einem Wulst (16) begrenzten Nut (20) im Halteprofil (18) und eines gestreckt ausgebildeten Profillappens (14) im Trägerprofil (10) oder einer von einem Wulst (16) begrenzten Hut (20) im Trägerprofil (10) und einer entsprechenden Ausformung (48) im Halteprofil (18).

8. Stromschiene nach einem der Ansprüche 1 - 7, dadurch gekennzeichnet, dass im nicht plastisch verformten oder verschweissten Verbindungsbereich des duktilen Halteprofils (18) mit dem Trägerprofil (10) ein Kontaktfett (32), vorzugsweise hochreine Vaseline, aufgetragen ist.

9. Stromschiene nach einem der Ansprüche 1 - 8, dadurch gekennzeichnet, dass das duktile Halteprofil (18) und das Trägerprofil (10), oder nur das Halteprofil (18) aus Reinaluminium, vorzugsweise Al99,5, E-Al(99,5) oder Al99,8, oder aus einer AlMgSi-Legierung, vorzugsweise AlMgSiO,5, E-AlMgSiO,5 oder Al99,75MgSi, besteht.

10. Stromschiene nach einem der Ansprüche 1 - 9, dadurch gekennzeichnet, dass das Trägerprofil (10) aus einer hochfesten, vorzugsweise nach dem Verbinden des Trägerprofils (10) mit dem Verbundprofil (22) ausgehärteten Aluminiumlegierung besteht.

## Claims

1. Composite current rail, especially high-power railway current rail, comprising a mechanically stable and highly electrically conductive aluminium girder section (10) and at least one small composite section (22) consisting of a highly electrically conductive ductile aluminium supporting section (18) and at least one steel strip (12) as a running surface for current collector shoes (56), characterised in that the composite section (22) is an extruded composite section (22).

2. Current rail according to claim 1, characterised in that the cross section of the composite section (22) is essentially in the form of an elongated rectangle and the steel strip (12) is preferably partially embedded in a longitudinal recess in the supporting section (18).

3. Current rail according to claim 1 or claim 2, characterised in that the supporting section (18) is 2 - 10 times, preferably 3 - 5 times as thick as the steel strip (12).

4. Current rail according to one of claims 1 - 3, characterised in that a flange (24) of the ductile supporting section (18) is anchored in a plastically deformed manner in a longitudinal groove (26) in the girder section (10) along at least one longitudinal side, preferably forming a metallic bond.

5. Current rail according to claim 4, characterised in that at least the girder section (10) has teeth (34) formed by extrusion in the region of the plastic deformation, preferably a groove (26).

6. Current rail according to one of claims 1 - 5, characterised in that the ductile supporting section (18) is welded to the girder section (10) along at least one longitudinal side, preferably by means of a weld seam (44).

7. Current rail according to one of claims 1 - 6, characterised in that the ductile supporting section (18) and the girder section (10) are fitted into one another along the non-plastically deformed or welded longitudinal side, preferably forming a groove (20) in the supporting section (18) defined by a bulb (16) and an elongated section lug (14) in the girder section (10) or a groove (20) in the girder section (10) defined by a bulb (16) and a corresponding rib (48) in the supporting section (18).

8. Current rail according to one of claims 1 - 7, characterised in that a contact grease (32), preferably high-purity vaseline, is applied in the non-plastically deformed or welded connecting region between the ductile supporting section (18) and the girder section (10).

9. Current rail according to one of claims 1 - 8, characterised in that the ductile supporting section (18) and the girder section (10) or only the supporting section (18) consists of pure aluminium, preferably A199.5, E-Al(99.5) or A199.8 or of an AlMgSi alloy, preferably AlMgSiO.5, E-AlMgSiO.5 or Al99.75MgSi.

10. Current rail according to one of claims 1 - 9, characterised in that the girder section (10) consists of a high-strength aluminium alloy, preferably hardened after the girder section (10) is connected to the composite section (22).

## Revendications

1. Rail d'alimentation composite, en particulier rail d'alimentation ferroviaire à haute puissance, comprenant un profilé porteur (10) en aluminium, stable sur le plan mécanique et bon conducteur de l'électricité et comprenant au moins un profilé composite (22) de petite taille constitué d'un profilé de maintien (18) en aluminium ductile et fortement conducteur de l'électricité et d'au moins une bande d'acier (12) en tant que surface de coulissement pour des patins de captage d'électricité (56), caractérisé en ce que le profilé composite (22) est un profilé composite extrudé (22).

2. Rail d'alimentation selon la revendication 1, caractérisé en ce que la section du profilé composite (22) est réalisée sensiblement sous la forme d'un rectangle allongé, et en ce que la bande d'acier (12) est de préférence partiellement noyée dans un évidement longitudinal du profil de maintien (18).

3. Rail d'alimentation selon l'une ou l'autre des revendications 1 et 2, caractérisé en ce que le profilé de maintien (18) a une épaisseur qui est de 2 à 10 fois, de préférence 3 à 5 fois celle de la bande d'acier (12).

4. Rail d'alimentation selon l'une quelconque des revendications 1 à 3, caractérisé en ce que le long d'au moins un côté longitudinal, une bride (24) du profilé de maintien (18) ductile est déformée plastiquement et ancrée dans une gorge longitudinale (26) du profilé porteur (10), de préférence avec formation d'une liaison métallique.

5. Rail d'alimentation selon la revendication 4, caractérisé que le profilé porteur (10) au moins comporte des dents (34) enfoncées à force dans la région de la déformation plastique, de préférence dans la région d'une gorge (26).

6. Rail d'alimentation selon l'une quelconque des revendications 1 à 5, caractérisé en ce que le profilé de maintien (18) ductile est soudé au profilé porteur (10) au moins le long d'un côté longitudinal, de préférence au moyen d'un cordon de soudure (44).

7. Rail d'alimentation selon l'une quelconque des revendications 1 à 6, caractérisé en ce que le profilé de maintien (18) ductile et le profilé porteur (10) sont emboîtés l'un dans l'autre le long du côté longitudinal qui n'est pas plastiquement déformé ou soudé, de préférence en formant une gorge (20), délimitée par un bourrelet (16), dans le profilé de maintien (18) et une languette de profilé (14) réalisée de manière allongée dans le profilé porteur (10), ou en formant une gorge (20) délimitée par un bourrelet (16), dans le profilé porteur (10), et une configuration saillante correspondante (48) dans le profilé de maintien (18).

8. Rail d'alimentation selon l'une quelconque des revendications 1 à 7, caractérisé en ce qu'une graisse de contact (32), de préférence de la vaseline ultra-pure, est appliquée dans la région de liaison, qui n'est pas déformée plastiquement ou soudée, du profilé de maintien (18) ductile avec le profilé porteur (10).

9. Rail d'alimentation selon l'une quelconque des revendications 1 à 8, caractérisé en ce que le profilé de maintien (18) ductile et le profilé porteur (10), ou uniquement le profilé de maintien (18), est réalisé en aluminium pur, de préférence Al 99,5, E-Al(99,5) ou Al 99,8, ou en un alliage AlMgSi, de préférence AlMgSiO,5, E-AlMgSiO,5 ou Al99,75MgSi.

10. Rail d'alimentation selon l'une quelconque des revendications 1 à 9, caractérisé en ce que le profilé porteur (10) est réalisé en un alliage d'aluminium à haute résistance, de préférence durci après la liaison du profilé porteur (10) avec le profilé composite (22).
